# FASCICULE DE BREVET EUROPEEN

(11) **EP 0 781 480 B1**
(45) Date de publication et mention de la délivrance du brevet: **08.03.2000**
(21) Numéro de dépôt: 95930579.8
(22) Date de dépôt: 13.09.1995
(51) Int. Cl.: H04L 12/56

(54) **DISPOSITIF DE ROUTAGE DE PAQUETS**
VORRICHTUNG ZUR LEITWEGLENKUNG VON PAKETEN
DATA PACKET ROUTING DEVICE

(30) Priorité: 14.09.1994 FR 9411220
(43) Date de publication de la demande: 02.07.1997
(73) Titulaire: FRANCE TELECOM, 75015 Paris (FR); TELEDIFFUSION DE FRANCE S.A., 75015 Paris (FR)
(72) Inventeur: HELARD, Jean-François, F-35700 Rennes (FR); GIACHETTI, Jean-Luc, F-35000 Rennes (FR)
(74) Mandataire: Maillet, Alain
(86) Numéro de dépôt international: FR9501172
(87) Numéro de publication internationale: WO9608900

(56) Documents cités:
- EP-A- 0 487 428
- FR-A- 2 660 501
- US-A- 5 121 383

## Description

La présente invention concerne un dispositif de routage et un dispositif de déroutage d'un système de transmission de données numériques arrangées en paquets. Elle concerne également un système de transmission qui utilise un tel dispositif de routage. Elle concerne encore un procédé mis en oeuvre dans un tel système de transmission. L'invention s'applique en particulier dans le cas où lesdites données numériques sont représentatives de signaux d'images et de signaux de sons. Elle appartient donc, dans cette application, au domaine de la télévision numérique.

Un système de télévision est prévu pour transmettre des signaux d'images, des signaux de sons et des signaux de données à des récepteurs qui reconstituent les images et les sons originels et qui utilisent les données de manière appropriée afin de présenter ces images et ces sons. Plusieurs programmes doivent être transmis, chaque programme pouvant comporter plusieurs voies sonores.

Dans un système de télévision numérique, les données d'images et les données de sons de plusieurs sources d'images et de sons sont codées pour former ce que l'on nomme, dans le domaine de la technique, des flux élémentaires d'images et des flux élémentaires de sons. Ces flux sont mis en paquets pour produire des paquets que l'on nomme paquets PES, comme Packetised Elementary Stream, de taille variable. Les paquets PES sont découpés en paquets transport de taille fixe qui sont multiplexés temporellement afin de former un unique flux de données, dit flux transport, par exemple du type de celui qui est défini dans la norme dite MPEG2.

On notera que chaque flux élémentaire correspond à une séquence d'images ou de sons qui a été codée. Un flux transport contient quant à lui plusieurs programmes de télévision chacun constitué d'un ou plusieurs flux élémentaires d'images et de un ou plusieurs flux élémentaires de sons.

Le flux transport issu du multiplexeur est alors transmis en mode asynchrone à un système de transmission par paquets constitué d'une unité d'émission et d'au moins une unité de réception.

Dans l'unité d'émission, il est traité avant sa transmission, par exemple par voie hertzienne, à des récepteurs. Ce traitement consiste essentiellement en un codage, par exemple un codage pour la détection et la correction d'erreurs, tel qu'un codage de Reed Solomon. Le flux de transport codé est ensuite modulé en vue de sa transmission.

Dans l'unité de réception, les signaux reçus sont démodulés et le flux transport est recouvré, l'opération de décodage correspondant à l'opération de codage et de correction ayant été effectuée au préalable. Le flux de transport recouvré est démultiplexé et chaque voie, portant un flux élémentaire, est décodée, dans un décodeur, pour la présentation, dans une unité de présentation, des flux élémentaires d'un programme.

Dans le flux transport, chaque paquet transport comporte un entête, lequel contient essentiellement un identificateur dit PID (Packet IDentifier) servant à identifier le flux élémentaire véhiculé par ce paquet transport. Ainsi, les paquets transport possédant le même identificateur PID transportent les données d'un et un seul flux élémentaire. Il y a donc au moins autant d'identificateurs que de flux élémentaires présents dans le flux transport.

Un identificateur PID est affecté à un paquet transport lors du multiplexage du ou des paquets PES correspondant. Il est utilisé à la reconstitution des flux élémentaires à partir du flux transport.

Une synchronisation parfaite des images et du son lors de leur décodage et lors de leur présentation est indispensable. Or, dans le flux transport, les données codées d'une séquence d'images sont transportées indépendamment des données de la ou des séquences de son associées à cette séquence d'images. Elles peuvent donc être séparées dans le temps au moment de l'arrivée à l'entrée du décodeur. De plus, les frontières temporelles de ces séquences d'images et de sons coïncident rarement.

Ainsi, pour synchroniser les opérations de décodage et de présentation du décodeur, des estampilles temporelles indiquant les instants corrects de présentation et de décodage des images et du son associé ainsi que des estampilles indiquant les valeurs d'une horloge de référence sont incorporées dans les paquets PES. Les premières sont respectivement appelées PTS et DTS (comme Presentation Time Stamps et Decoding Time Stamps). Les secondes sont nommées PCR (comme Program Clock Reference).

Ces estampilles, présentes également dans le flux transport, sont transmises en même temps que lui. Elles servent aux opérations de décodage et de présentation des flux élémentaires.

En effet, les estampilles PCR indiquent les valeurs correctes de l'horloge de référence système et permettent de recouvrer le signal d'horloge de référence dans les décodeurs et dans les unités de présentation.

Les estampilles de décodage DTS et les estampilles de présentation PTS indiquent quant à elles les instants définis par rapport à l'horloge de référence système auxquels doivent être déclenchés les processus de décodage et de présentation des flux élémentaires recouvrés.

On comprendra que les estampilles PCR dans un flux transport fournissent l'horloge de référence pour un seul programme, étant entendu qu'un programme est un ensemble de flux élémentaires d'images et de sons qui ont la même base de temps et qui nécessitent un décodage et une présentation synchronisés. Le multiplexage dans un même flux de transport de plusieurs programmes possédant chacun leur propre base de temps est possible si chacun possède son propre champ d'estampilles PCR.

Comme il a été mentionné ci-dessus, l'unité d'émission reçoit le flux transport engendré par le multiplexeur de paquets transport, effectue un codage, par exemple un codage de Reed Solomon suivi ou pas d'un autre codage, du type convolutif, dudit flux de transport et module les données générées par ce codage en vue de leur émission.

L'unité de réception effectue les opérations inverses pour recouvrer le flux transport qui est utilisé pour la présentation des flux élémentaires comme il a été expliqué ci-dessus.

Alors que l'unité d'émission et l'unité de réception sont prévues pour fonctionner en mode synchrone, la liaison entre le multiplexeur et l'unité d'émission fonctionne en mode asynchrone. Cela permet de n'utiliser qu'une liaison unidirectionnelle entre la sortie du multiplexeur de paquets transport et l'entrée de l'unité d'émission qui, en pratique, peuvent être éloignées l'une de l'autre. Afin d'éviter le débordement des circuits d'entrée de l'unité d'émission, le débit généré par le multiplexeur est inférieur au débit de transmission de l'unité d'émission.

En conséquence, pour adapter la taille des flux transport au débit de transmission du flux par l'unité d'émission, il est nécessaire, avant le codage du flux transport, de prévoir l'insertion de paquets de bourrage dans le flux transport. Ces paquets de bourrage, de par leur fonction, ne contiennent aucune donnée utile et sont reconnaissables par une valeur prédéterminée de leur identificateur.

Une conséquence de l'insertion de ces paquets de bourrage est la perte de validité des estampilles temporelles, notamment de l'estampille de référence d'horloge PCR. Pour remédier à cette perte, il est donc nécessaire de prévoir une opération qui reconstitue des estampilles valides.

On connaît dans les systèmes de transmission par paquets l'utilisation de plusieurs classes de priorité. On pourra se reporter par exemple au document de brevet US-A-5 121 383 dont le but est un multiplexage statistique pour une transmission efficace tenant compte à la fois du délai de transmission et des desiderata quant aux pertes. Dans ce document, chaque paquet appartient à une des classes de priorité de perte et est dirigé, au moyen d'un commutateur approprié, vers la file FIFO qui est associée à la classe de priorité correspondante.

Dans la présente invention, les données utiles du flux transport sont séparées en plusieurs champs qui correspondent également à des niveaux de priorité différents. Ces niveaux de priorité sont par exemple définis dans les identificateurs des paquets du flux transport. Les données ayant des niveaux de priorité différents sont traitées différemment au moment du codage dans l'unité d'émission, lors de la transmission et ainsi qu'au moment du décodage dans l'unité de réception, ce qui nécessite leur routage avant codage.

A titre d'exemple, les données d'un flux transport sont séparées en trois champs: les données de haute priorité correspondant à l'information la mieux protégée, comme des données concernant des images de définition standard, les données de moyenne priorité, comme des données supplémentaires nécessaires à une haute définition des mêmes images, et des données de basse priorité correspondant à des données supplémentaires nécessaires à une très haute définition des mêmes images.

Dans l'unité de réception, l'opération inverse à celle du routage doit être mise en place.

Le but de l'invention est donc de prévoir un système de transmission de données numériques arrangées en paquets, lesdites données étant représentatives de signaux d'images et de signaux de sons engendrés par une ou plusieurs sources, ledit système comportant une unité d'émission prévue pour recevoir, en mode asynchrone, un flux entrant de paquets, pour le traiter et pour le transmettre à au moins une unité de réception, chaque paquet du flux entrant étant affecté d'un degré de priorité défini parmi un nombre prédéterminé de degrés de priorité, les paquets affectés d'un degré de priorité donné étant traités et transmis par ledit système de transmission d'une manière spécifique audit degré de priorité.

Un autre but de l'invention est de prévoir un tel système de transmission qui autorise une transmission différentiée pour les paquets affectés de degrés de priorité différents.

Un autre but de l'invention est de prévoir un tel système de transmission dont la structure soit simplifiée, aussi bien au niveau de l'unité d'émission qu'au niveau de l'unité de réception.

A cet effet, un système de transmission selon l'invention est caractérisé en ce que ladite unité d'émission comprend, d'une part, un dispositif de routage constitué d'une pluralité de files, d'un dispositif d'aiguillage de paquets prévu pour diriger chaque paquet du flux entrant vers l'entrée de l'une des files selon le degré de priorité auquel il est affecté, ledit paquet étant alors stocké dans ladite file, la lecture desdites files étant effectuée séquentiellement, chaque file délivrant alors un paquet d'un flux séparé de paquets, des moyens pour insérer un paquet de bourrage dans le flux séparé de paquets pour lequel il n'y a pas de paquets dans la file lue et, d'autre part, des circuits de traitement et d'émission des flux séparés de paquets issus du dispositif de routage.

Selon une autre caractéristique de l'invention, chaque unité de réception est constituée de circuits de réception et de traitement des signaux transmis par l'unité d'émission, lesdits circuits étant prévus pour engendrer des flux de paquets reçus correspondant à chacun desdits degrés de priorité et d'un dispositif de déroutage prévu pour former, à partir desdits flux de paquets reçus, un flux sortant de paquets, ledit dispositif de déroutage étant constitué d'une pluralité de files dont chacune d'elles est prévue pour stocker les paquets d'un flux de paquets reçu de degré de priorité donné, la lecture desdites files étant effectuée séquentiellement, chaque file délivrant alors un paquet du flux sortant de paquets.

Le but de l'invention est également de prévoir un système de transmission tel que celui qui vient d'être décrit, dans lequel certains paquets du flux entrant comprennent des estampilles, notamment des estampilles de référence d'horloge système, des estampilles de décodage et des estampilles de présentation.

Selon une autre caractéristique de l'invention, la sortie de chaque file du dispositif de routage est reliée à l'entrée d'un dispositif de réestampillage prévu pour recalculer les valeurs d'estampilles rendues non valides suite au réarrangement des paquets effectué par le dispositif de routage et/ou suite à l'insertion des paquets de bourrage.

Selon une variante de réalisation, les flux séparés de paquets sont arrangés en sortie du dispositif de routage sous la forme d'un multiplex temporel. Dans ce cas, le multiplex temporel issu du dispositif de routage est fourni à l'entrée d'un dispositif de réestampillage prévu pour recalculer les valeurs d'estampilles rendues non valides suite au réarrangement des paquets effectué par le dispositif de routage et suite à l'insertion des paquets de bourrage.

L'invention concerne également un dispositif de routage d'une unité d'émission d'un système de transmission de données numériques arrangées en paquets, lesdites données étant représentatives de signaux d'images et de signaux de sons engendrés par une ou plusieurs sources, ladite unité d'émission étant prévue pour recevoir, en mode asynchrone, un flux entrant de paquets, pour le traiter et pour le transmettre à au moins une unité de réception, chaque paquet dudit flux entrant étant affecté d'un degré de priorité défini parmi un nombre prédéterminé de degrés de priorité, ledit dispositif de routage étant prévu pour séparer le flux entrant de paquets en plusieurs flux de paquets, chaque flux séparé de paquets véhiculant les paquets du flux entrant qui possèdent un même degré de priorité.

Selon l'invention, ledit dispositif de routage est constitué d'une pluralité de files, d'un dispositif d'aiguillage de paquets prévu pour diriger chaque paquet du flux entrant vers l'entrée de l'une des files selon le degré de priorité auquel il est affecté, ledit paquet étant alors stocké dans ladite file, la lecture desdites files étant effectuée séquentiellement, chaque file délivrant alors un paquet d'un flux séparé de paquets, et de moyens pour insérer un paquet de bourrage dans le flux séparé de paquets pour lequel il n'y a pas de paquets dans la file lors de sa lecture.

Dans le cas où certains paquets du flux entrant comportent des estampilles, notamment des estampilles de référence d'horloge système, des estampilles de décodage et des estampilles de présentation, ledit dispositif de routage comporte, à la sortie de chaque file, un dispositif de réestampillage prévu pour recalculer les valeurs d'estampilles rendues non valides suite au réarrangement des paquets effectué par le dispositif de routage et/ou suite à l'insertion des paquets de bourrage.

Selon un mode de réalisation de l'invention, les flux séparés de paquets sont arrangés en sortie du dispositif de routage sous la forme d'un multiplex temporel.

Dans ce cas, ledit multiplex temporel issu du dispositif de routage est fourni à l'entrée d'un dispositif de réestampillage prévu pour recalculer les valeurs d'estampilles rendues non valides suite au réarrangement des paquets effectué par le dispositif de routage et/ou suite à l'insertion des paquets de bourrage.

L'invention concerne encore un procédé qui est mis en oeuvre dans le système de transmission décrit ci-dessus ainsi que dans le dispositif de routage ci-dessus.

Il est caractérisé en ce qu'il consiste, dans une unité d'émission, en synchronisme avec le flux entrant de paquets, à diriger chaque paquet du flux entrant vers l'entrée d'une file parmi n files selon le degré de priorité auquel il est affecté, à stocker ledit paquet dans ladite file, et, en synchronisme avec une horloge système, à lire séquentiellement lesdites files afin qu'elles délivrent respectivement des flux séparés de paquets, à insérer un paquet de bourrage dans le flux séparé de paquets pour lequel il n'y a pas de paquets dans la file lue, et à délivrer chaque flux séparé de paquets en vue de son traitement et de son émission ultérieurs vers une unité de réception.

Selon une autre caractéristique de l'invention, il consiste, dans une unité de réception, à recevoir et à traiter les signaux transmis par l'unité d'émission de manière à engendrer des flux de paquets reçus correspondant à chacun desdits degrés de priorité, et à former, à partir desdits flux de paquets reçus, un flux sortant de paquets.

Selon une autre caractéristique de l'invention, il consiste à stocker, dans une file parmi une pluralité de files, les paquets d'un flux de paquets reçus de degré de priorité donné, et à lire lesdites files séquentiellement de manière à délivrer ledit flux sortant de paquets.

Dans le cas où certains paquets du flux entrant comprennent des estampilles, notamment des estampilles de référence d'horloge système, des estampilles de décodage et des estampilles de présentation, il consiste à effectuer, sur chaque flux séparé de paquets, un réestampillage pour recalculer les valeurs d'estampilles rendues non valides suite au réarrangement des paquets effectué par le dispositif de routage et/ou suite à l'insertion des paquets de bourrage.

Selon une autre caractéristique de l'invention, lesdits flux séparés de paquets sont délivrés dans un même multiplex temporel. Dans ce cas, il consiste à effectuer, sur ledit multiplex temporel, un réestampillage pour recalculer les valeurs d'estampilles rendues non valides suite au réarrangement des paquets et/ou suite à l'insertion des paquets de bourrage.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 est un schéma synoptique d'un système de télévision dont le système de transmission est un système de transmission selon l'invention,
la Fig. 2 est un schéma synoptique d'un dispositif de routage d'un système de transmission selon l'invention,
la Fig. 3 est un schéma synoptique d'un dispositif de déroutage/décodeur d'un système de transmission selon l'invention, et
les Figs. 4a à 4c sont des diagrammes montrant le fonctionnement d'un système de transmission selon l'invention.

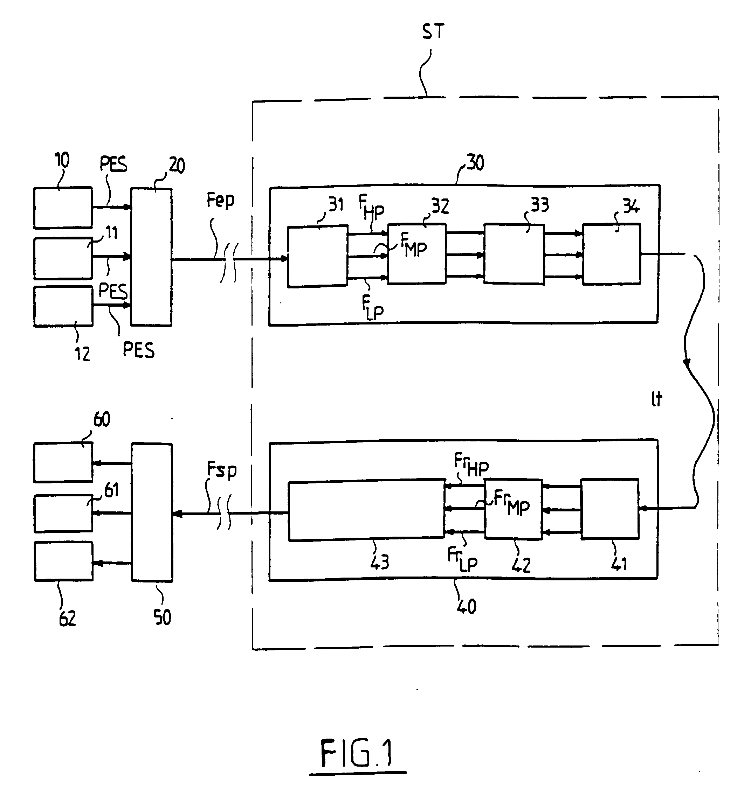

Le système de télévision représenté à la Fig. 1 comprend essentiellement un codeur d'images 10, un codeur de sons 11 et un codeur de données 12, un multiplexeur temporel 20, un système de transmission ST constitué d'une unité d'émission 30 reliée, par une liaison de transmission lt, à au moins une unité de réception 40, un démultiplexeur temporel 50, un décodeur d'images 60, un décodeur de sons 61 et un décodeur de données 62.

Les codeurs 10, 11, 12 sont prévus pour délivrer, à partir des flux élémentaires respectivement délivrés par une pluralité de sources d'images, de sons et de données (non représentées), des données qui sont transmises sous forme de paquets PES au multiplexeur 20. Le multiplexeur 20 est prévu quant à lui pour découper les paquets PES en paquets de taille fixe, appelés paquets transport, et à multiplexer temporellement lesdits paquets transport afin de former un flux transport Fep.

Ce flux transport Fep est transmis, par une liaison asynchrone, à l'entrée du système de transmission ST et, plus particulièrement, à l'entrée de l'unité d'émission 30. Il est appelé par la suite flux entrant de paquets Fep.

Le flux entrant de paquets Fep est transmis et est recouvré et délivré à la sortie du système de transmission ST sous la forme d'un flux sortant de paquets Fsp.

Le flux sortant Fsp engendré par l'unité de réception 40 est transmis, au moyen d'une liaison asynchrone, à l'entrée du démultiplexeur 50 dont les sorties sont respectivement reliées aux entrées des décodeurs 60, 61 et 62. Ceux-ci sont prévus pour décoder les données des flux élémentaires transmis dans les paquets délivrés par le démultiplexeur 50 et pour présenter ces données sous forme de séquences d'images et de sons.

Comme il a déjà été mentionné ci-dessus, chaque paquet délivré par le multiplexeur 20 et se retrouvant donc dans le flux entrant Fep appartient, selon le degré de priorité auquel sont affectées les données qu'il contient, à trois types de paquets: un type de haute priorité HP, un type de moyenne priorité MP et un type de basse priorité LP.

C'est au niveau des codeurs 10, 11 et 12 que les données sont affectées d'un degré de priorité. Dans le flux entrant Fep, chaque paquet comporte un en-tête qui contient l'identificateur appelé PID servant à identifier le flux élémentaire qu'il véhicule. Ainsi, à chaque identificateur PID, est associé un degré de priorité, HP, MP ou LP.

L'unité d'émission 30 est essentiellement constituée d'un dispositif de routage 31, d'un premier codeur 32, d'un second codeur 33 et d'un émetteur 34.

Le dispositif de routage 31 a pour fonction essentielle de séparer le flux entrant de paquets Fep en autant de flux de paquets F_{HP}, F_{MP} et F_{LP} qu'il y a de degrés de priorité, ici trois. Une autre fonction du dispositif de routage 31 est de résoudre les problèmes résultant de la différence entre le débit engendré par le multiplexeur 20 et le débit du système de transmission ST, lequel est nécessairement supérieur, comme on l'a déjà mentionné, au débit engendré par le multiplexeur 20.

Le premier codeur 32 est par exemple un codeur du type codeur/correcteur tel qu'un codeur de Reed Solomon suivi des circuits d'entrelacement prévus pour chaque flux transport de priorité différente.

Le second codeur 33 est par exemple un codeur convolutif.

L'unité de réception 40 est essentiellement constituée d'un récepteur 41, d'un décodeur 42, par exemple du type codeur convolutif correspondant au codeur convolutif 33 de l'unité d'émission 30, et d'un décodeur/dispositif de déroutage 43.

La fonction du décodeur/dispositif de déroutage 43 est, d'une part, d'effectuer un décodage qui corresponde au codage réalisé par le codeur 32 de l'unité d'émission 30 et, d'autre part, de regrouper en un seul flux transport Fsp les flux reçus de paquets Fr_{HP}, Fr_{MP} et Fr_{LP} de priorité différente issus du décodeur 42.

Chaque paquet transport HP, MP, LP dans le flux entrant Fep, dans les flux F_{HP}, F_{MP} et F_{LP} est, dans un mode de réalisation de l'invention, constitué de 188 octets dont les 4 premiers constituent son en-tête. Dans ces 4 octets, 13 bits constituent l'identificateur PID du paquet servant à identifier le flux élémentaire véhiculé par ce paquet.

On notera que, plus le degré de priorité des données d'un paquet de transport est élevé, plus leur transmission doit se faire avec un taux d'erreurs faible et plus la perte de leur contenu peut être évitée. Aussi, chaque flux de paquets séparé F_{HP}, F_{MP} et F_{LP} avec un degré de priorité déterminé est donc traité séparément, notamment dans le codeur convolutif 33, dans l'émetteur 34 et le récepteur 41 et dans le décodeur 42.

Les données utiles de chaque paquet de transport HP, MP et LP comprennent en outre des champs dans lesquels sont respectivement présentes des estampilles de présentation PTS, des estampilles de décodage DTS et des estampilles de référence d'horloge PCR.

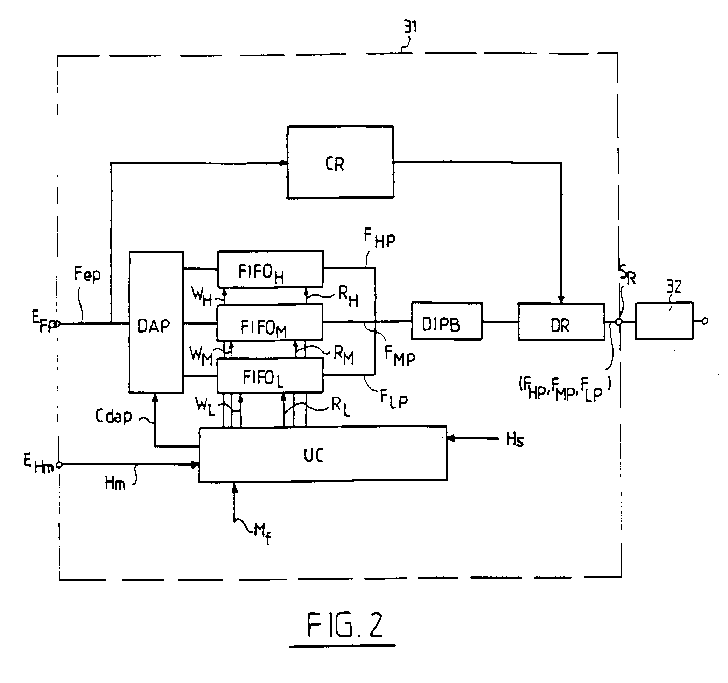

On a représenté à la Fig. 2 le dispositif de routage 31 selon l'invention.

Il comprend une entrée E_{FP} à laquelle est fourni le flux entrant de paquets Fep issu du multiplexeur 20 et une seconde entrée E_{Hm} à laquelle est fourni un signal d'horloge Hm engendré par le multiplexeur 20 en relation avec l'horloge système des codeurs 11, 12 et 13 et en synchronisme avec les paquets du flux entrant Fep.

L'entrée E_{FP} est reliée à l'entrée d'un dispositif d'aiguillage de paquets DAP dont les trois sorties sont respectivement reliées aux trois entrées de trois files FIFO_{H}, FIFO_{M} et FIFO_{L}. Les trois sorties des trois files FIFO_{H}, FIFO_{M} et FIFO_{L} sont reliées, par une même liaison, à l'entrée d'un dispositif d'insertion de paquets de bourrage DIPB dont la sortie est reliée à l'entrée d'un dispositif de réestampillage DR. La sortie du dispositif de réestampillage DR est reliée à la sortie S_{R} du dispositif de routage.

On notera que la sortie S_{R} du dispositif de routage 31 est destinée à être reliée au codeur 32.

On remarquera que les flux de paquets séparés F_{HP}, F_{MP} et F_{LP} sont, à la sortie du dispositif de routage 31, portés par un même multiplex temporel noté sur la Fig. 2 (F_{HP}, F_{MP}, F_{LP}).

Le dispositif de routage 31 comprend encore un circuit de recouvrement d'estampilles CR dont l'entrée est reliée à l'entrée E_{FP} du dispositif de routage pour y recevoir les paquets HP, MP et LP du flux entrant Fep et dont la sortie est reliée à une entrée de commande du dispositif de réestampillage DR.

Une unité de contrôle UC a une sortie reliée à l'entrée de commande du dispositif d'aiguillage de paquets DAP pour y délivrer un signal de commande Cdap. Elle a encore trois sorties respectivement reliées aux entrées de commande en écriture et en lecture des trois files FIFO_{H}, FIFO_{M} et FIFO_{L} pour respectivement leur délivrer des signaux de commande en écriture W_{H}, W_{M} et W_{L} et des signaux de commande en lecture R_{H}, R_{M} et R_{L}. L'unité de commande UC a également deux entrées respectivement prévues pour recevoir les signaux d'horloge Hm délivrés par le multiplexeur 20 et des signaux d'horloge système Hs. Elle comprend enfin une entrée sur laquelle sont délivrés des signaux de modes de fonctionnement Mf.

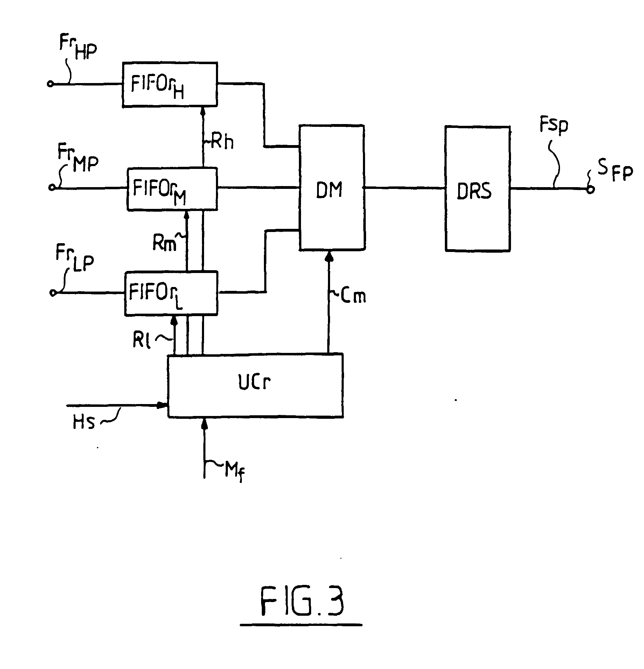

Le décodeur/dispositif de déroutage 43 associé au dispositif de routage 31 de l'invention est maintenant décrit en relation avec la Fig. 3.

Il comporte trois files FIFOr_{H}, FIFOr_{M} et FIFOr_{L} dont les entrées sont respectivement reliées aux sorties correspondantes du décodeur convolutif 42 pour respectivement y recevoir les flux reçus de paquets Fr_{HP}, Fr_{MP} et Fr_{LP} portant respectivement les paquets affectés d'une haute priorité HP, les paquets affectés d'une priorité moyenne MP et les paquets affectés d'une basse priorité LP. La sortie des files FIFOr_{H}, FIFOr_{M} et FIFOr_{L} sont reliées à l'entrée d'un dispositif de déroutage DM dont la sortie est reliée à un décodeur DRS, qui est du type correspondant au codeur 32 de l'unité d'émission 30, par exemple un décodeur de Reed Solomon. La sortie du décodeur DRS constitue la sortie S_{FP} du décodeur/dispositif de déroutage 43 sur laquelle est délivré le flux sortant de paquets Fsp.

On notera qu'au lieu du décodeur DRS, il pourrait être prévu trois décodeurs identiques dans les flux reçus de paquets.

Le dispositif de déroutage DM a une entrée de commande qui est reliée à une sortie de commande d'une unité de contrôle UC pour y recevoir un signal Cm. L'unité de contrôle UC est prévue pour recevoir le signal d'horloge système Hs. Elle est également prévue pour recevoir un signal de commande de modes de fonctionnement Mf.

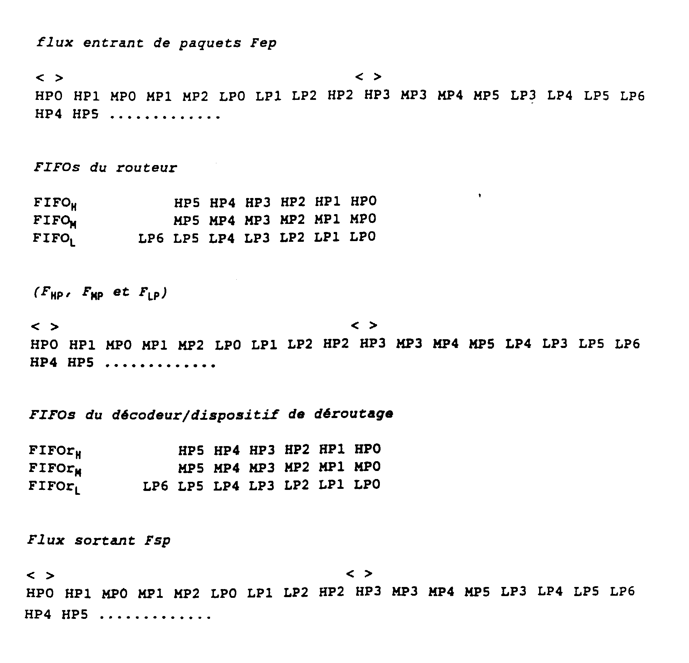

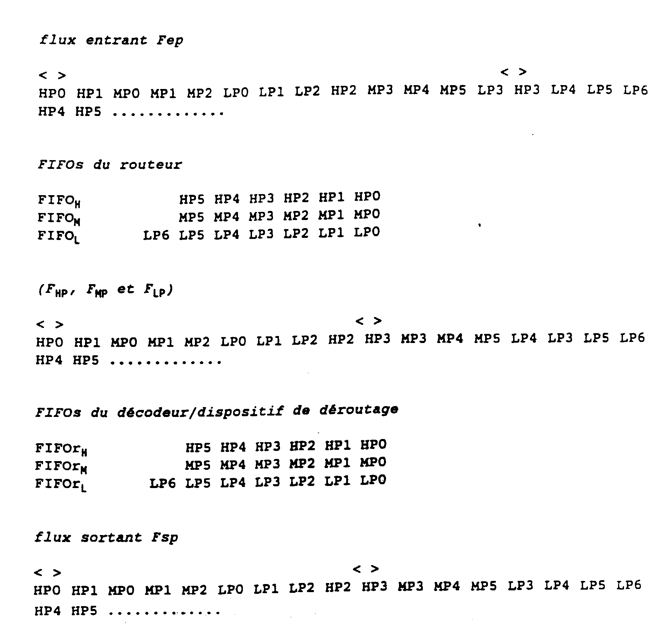

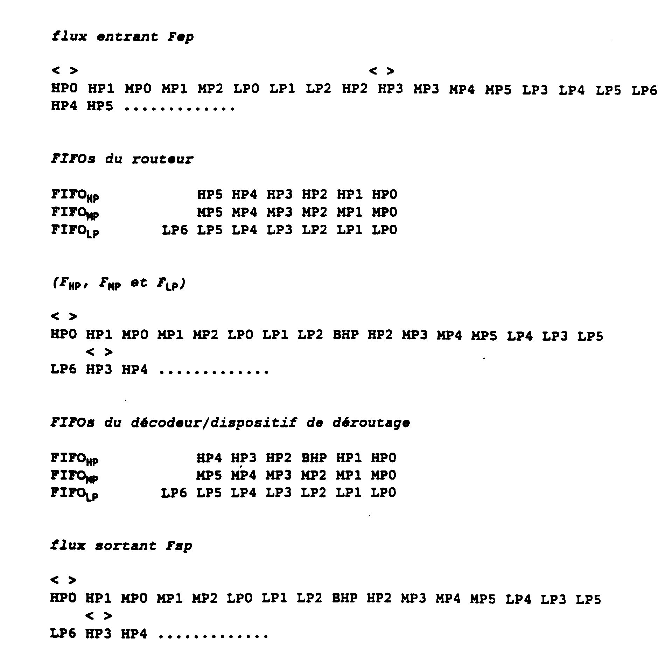

Le fonctionnement du dispositif de routage de l'invention et celui du décodeur/dispositif de déroutage associé sont maintenant expliqués en relation avec les Figs. 4a à 4c.

L'unité d'émission 30 et l'unité de réception 40 fonctionnent de manière que pour chaque degré de priorité un nombre entier de paquets transports HP, MP, LP soit véhiculé par trame. Plusieurs modes de fonctionnement peuvent être envisagés, correspondant à deux débits respectivement de 12 et 24 Mbits/seconde et à l'aspect hiérarchique ou non du système de transmission. Pour chacun des modes envisagés, on a répertorié, dans le tableau suivant, le nombre de paquets de haute priorité HP, de moyenne priorité MP et basse priorité LP par trame transmise.

**Tableau 1**

| Mode | HP | MP | LP |
|---|---|---|---|
| Mode 1A | 123 | 189 | 211 |
| Mode 1B | 124 | 372 | 0 |
| Mode 2A | 124 | 124 | 0 |
| Mode 2B | 124 | 124 | 0 |
| Mode 3A | 492 | 0 | 0 |
| Mode 3B | 496 | 0 | 0 |

On constate que les modes 3A et 3B sont des modes non-hiérarchiques contrairement aux autres modes. On constate également que le mode lA est le seul qui exploite trois niveaux de priorité.

Ces différents modes sont donnés à titre d'exemple. En particulier, dans le cadre de l'invention, le nombre de degrés de priorité n'est pas limité à trois mais peut être quelconque.

Les unités de commande UC de l'unité d'émission 30 et de l'unité de réception 40 sont prévues pour être configurées dans l'un des modes définis ci-dessus par positionnement de signaux appropriés Mf sur leurs entrées de commande de mode de fonctionnement.

Aux Figs. 4a à 4c, on a montré les paquets transport HP, MP et LP dans le flux entrant Fep à la sortie du multiplexeur temporel 20, dans les files FIFO_{H}, FIFO_{M} et FIFO_{L} du dispositif de routage 31, dans le multiplex (F_{HP}, F_{MP}, F_{LP}) à la sortie du dispositif de routage 31, dans les files FIFOr_{H}, FIFOr_{M} et FIFOr_{L} du décodeur/dispositif de déroutage 43 et dans le flux sortant Fsp à la sortie du décodeur/dispositif de déroutage 43.

Dans ces Figs. 4a à 4c et uniquement dans ces Figs., les paquets de chaque degré de priorité sont numérotés par leur ordre d'arrivée, ceci afin de pouvoir les identifier et les reconnaître tout au long du système de transmission ST. En réalité, ils ne sont pas numérotés. Les paquets HP qui portent des estampilles de référence d'horloge sont marqués de parenthèses.

A la Fig. 4a, le multiplexeur 20 délivre un flux transport Fep dont l'apparition des paquets transport de différentes priorités répond à une statistique qui pourrait être employée pour l'utilisation du système dans le mode de fonctionnement 1A: 2HP, 3MP, 3LP, 2HP, 3MP, 4LP, etc.

Dans le dispositif d'aiguillage de paquets DAP du dispositif de routage 31, les identificateurs PID des paquets incidents sont lus et leur degré de priorité est déduit. Selon le degré de priorité déduit, les paquets incidents sont aiguillés et stockés dans l'une des files FIFO_{H}, FIFO_{M} et FIFO_{L}. Cette opération est effectuée sous la commande de l'unité de commande UC qui délivre les signaux de commande Cdap, Wh, Wm et Wl en synchronisme avec le signal d'horloge Hm délivré par le multiplexeur 20.

On constate à la Fig. 4a que les paquets affectés d'une haute priorité sont rangés dans la file FIFO_{H}, que ceux qui sont affectés d'une moyenne priorité sont rangés dans la file FIFO_{M} et que ceux qui sont affectés d'une basse priorité sont rangés dans la file FIFO_{L}.

La lecture des files FIFO_{H}, FIFO_{M} et FIFO_{L} est pilotée par l'unité de commande UC qui délivre pour ce faire les signaux Rh, Rm et Rl et ce en synchronisme avec l'horloge système Hs.

Dans le cas qui est traité à la Fig. 4a, à chaque impulsion de lecture Rh, Rm ou Rl, la file FIFO_{H}, FIFO_{M} et FIFO_{L} commandée délivre un paquet HP, MP ou LP. Il n'y a alors pas d'insertion de paquets de bourrage par le dispositif DIPB.

Dans ce cas, le dispositif de routage 31 délivre donc le multiplex temporel (F_{HP}, F_{MP}, F_{LP}) qui est représenté à la Fig. 4a.

Dans le décodeur/dispositif de déroutage 43, les paquets de chacun des flux reçus de paquets Fr_{HP}, Fr_{MP} et Fr_{LP} sont rangés dans les trois files FIFOr_{H}, FIFOr_{M} et FIFOr_{L} en fonction de leur délivrance à la sortie du décodeur 42. La situation est celle représentée à la Fig. 4a

La lecture des files FIFOr_{H}, FIFOr_{M} et FIFOr_{L} est effectuée par l'unité de commande UCr qui délivre pour ce faire les impulsions de lecture Rh, Rm et Rl et le signal Cm au dispositif de déroutage, et ce en synchronisme avec le signal d'horloge de référence Hs. Les impulsions de commande de lecture Rh, Rm et Rl sont délivrées séquentiellement aux files FIFOr_{H}, FIFOr_{M} et FIFOr_{L} correspondantes de manière à respecter la statistique du mode de fonctionnement choisi. Dans le cas représenté où le mode de transmission est le mode 1A (voir tableau 1), il y a deux impulsions Rh, suivies de trois impulsions Rm, suivies de trois impulsions Rl, puis de deux impulsions Rh, trois impulsions Rm, quatre impulsions Rl, et ainsi de suite.

Le flux sortant de paquets Fsp est celui qui est représenté à la Fig. 4a.

A la Fig. 4b, on a opéré, dans le flux entrant de paquets Fep, à une modification arbitraire dans l'apparition des paquets par rapport au cas idéal représenté à la Fig. 4a. Par cette modification, un seul paquet de haute priorité HP2 est apparu au lieu de deux et le paquet HP3 manquant est apparu entre les paquets LP3 et LP4.

On constate que les paquets HP, HP et LP dans les files FIFO_{H}, FIFO_{M}, et FIFO_{L}, les paquets dans le multiplex de flux séparés de paquets (F_{HP}, F_{MP}, F_{LP}) en sortie du dispositif de routage 31, les paquets dans les files FIFOr_{H}, FIFOr_{M} et FIFOr_{L} du dispositif de déroutage 33 et les paquets dans le flux sortant Fsp ne sont pas modifiés par rapport au cas idéal de la Fig. 4a. Il y a donc une différence entre le flux entrant de paquets Fep à l'entrée du dispositif de routage 31 et celui Fsp en sortie du décodeur/dispositif de déroutage 43, différence qui se traduit notamment par l'avance du paquet HP3 d'une durée égale à celle de trois paquets.

On a représenté, sur cette Fig. 4b, par des parenthèses placées au dessus de certains paquets, les paquets de haute priorité qui portent des estampilles de référence d'horloge système PCR. La fonction du réestampillage qui est effectuée par le dispositif de réestampillage DR est d'affecter de nouvelles valeurs aux estampilles PCR de manière à tenir compte des avances ou des retards auxquels peuvent être soumis les paquets lors de leur transmission dans le système de transmission ST.

Le circuit de recouvrement d'estampilles CR, à partir des valeurs des estampilles PCR présentes dans les paquets du flux entrant Fep, recalcule les nouvelles valeurs d'estampilles et le dispositif DR remplace, dans les paquets concernés, les anciennes valeurs par les nouvelles.

Cette fonction de réestampillage ne faisant pas l'objet du présent brevet, n'est pas décrite plus en détail ici.

A la Fig. 4c, le flux transport à l'entrée du dispositif de routage 31 est le même que celui qui est représenté à la Fig. 4a. Les files FIFO_{H}, FIFO_{M}, et FIFO_{L} sont donc commandées en écriture de la même manière. Cependant, lors de la lecture de la file FIFO_{H} après la lecture du paquet LP3, on a considéré arbitrairement que la file FIFO_{H} ne contenait pas de paquets. Cette lecture s'est donc traduite par l'apparition d'un paquet vide que le dispositif DIPB affecte d'un en-tête représentatif d'un paquet de bourrage BHP.

Un paquet de bourrage est un paquet dont l'en-tête est spécifique et dont les champs de données sont vides.

On notera que, dans le multiplex (F_{HP}, F_{MP}, F_{LP}) délivré en sortie du dispositif de routage 31, le paquet de bourrage BHP se trouve à la place d'un paquet de haute priorité HP. Il en résulte que le paquet BHP est reconnu ici par le système de transmission ST comme étant un paquet de haute priorité HP. Cela signifie qu'il est traité dans les opérations de codage et de décodage notamment dans les circuits 32, 33, 42, dans le décodeur/dispositif de déroutage 43, dans l'émetteur 34 et le récepteur 41 comme un paquet de haute priorité HP. C'est ce qui est visible à la Fig. 4c, notamment par le rangement des paquets dans les files FIFOr_{H}, FIFOr_{M} et FIFOr_{L} et dans le flux sortant de paquets Fsp en sortie du décodeur/dispositif de déroutage 43.

Dans ce cas particulier, on a également mis en évidence les paquets qui portent les estampilles PCR.

On constate que, de par la structure même du dispositif de routage 31 qui ordonne dans un ordre prédéterminé les paquets HP, MP et LP dans chacun des flux séparés de paquets F_{HP}, F_{MP} et F_{LP}, l'opération de lecture de files FIFOr_{H}, FIFOr_{M} et FIFOr_{L} du dispositif de déroutage 43 est une opération simple qui ne nécessite pas la lecture des en-têtes des paquets transport qui sont stockés dans les files et qui ne nécessite pas non plus la numérotation des paquets, notamment au niveau du dispositif de routage 31.

On remarquera que le fait de ranger et traiter les paquets de bourrage comme des paquets d'un degré de priorité donné, ne perturbe pas l'ordre défini ci-dessus.

On notera encore, à titre de remarque, que la numérotation des paquets, si elle était nécessaire, serait particulièrement dommageable puisqu'elle pourrait aboutir à un non-fonctionnement du système dans le cas où le numéro d'un paquet aurait été transmis avec une erreur.

## Revendications

1. Dispositif de routage d'une unité d'émission (30) d'un système de transmission de données numériques arrangées en paquets, lesdites données étant représentatives de signaux d'images et de signaux de sono engendrés par une ou plusieurs sources, ladite unité d'émission (30) étant prévue pour recevoir, en mode asynchrone, un flux entrant de paquets (Fep), pour le traiter et pour le transmettre à au moins une unité de réception (40), chaque paquet dudit flux entrant (Fep) étant affecté d'un degré de priorité défini parmi un nombre prédéterminé de degrés de priorité, ledit dispositif de routage étant prévu pour séparer le flux entrant de paquets en plusieurs flux de paquets (F_{HP}, F_{MP}, F_{LP}), chaque flux séparé de paquets (F_{HP}, F_{MP}, F_{LP}) véhiculant les paquets du, flux entrant qui possèdent un même degré de priorité, caractérisé en ce que ledit dispositif de routage (31) est constitué d'une pluralité de files (FIFO_{H}, FIFO_{M}, FIFO_{L}), d'un dispositif d'aiguillage de paquets (DAP) prévu pour diriger chaque paquet du flux entrant (HP, MP, LP) vers l'entrée de l'une des files (FIFO_{H}, FIFO_{M}, FIFO_{L}) selon le degré de priorité auquel il est affecté, ledit paquet (HP, MP, LP) étant alors stocké dans ladite file (FIFO_{H}, FIFO_{M}, FIFO_{L}), la lecture desdites files (FIFO_{H}, FIFO_{M}, FIFO_{L}) étant effectuée séquentiellement, chaque file (FIFO_{H}, FIFO_{M}, FIFO_{L}) délivrant alors un paquet (HP, MP, LP) d'un flux séparé de paquets (F_{HP}, F_{MP}, F_{LP}), et de moyen (DIPB) pour insérer un paquet de bourrage (BHP, BMP, BLP) dans le flux séparé de paquets (F_{HP}, F_{MP}, F_{LP}) pour lequel il n'y a pas de paquets dans la file (FIFO_{H}, FIFO_{M}, FIFO_{L}) lors de sa lecture.

2. Dispositif de routage selon la revendication 1, certains paquets du flux entrant comportant des estampilles, notamment des estampilles de référence d'horloge système (PCR), des estampilles de décodage (DTS) et des estampilles de présentation (PTS), caractérisé en ce qu'il comporte, à la sortie de chaque file (FIFO_{H}, FIFO_{M}, FIFO_{L}), un dispositif de réestampillage (DR) prévu pour recalculer les valeurs d'estampilles rendues non valides suite au réarrangement des paquets effectué par le dispositif de routage (31) et/ou suite à l'insertion des paquets de bourrage.

3. Dispositif de routage selon une des revendications 1 ou 2, caractérisé en ce que les flux séparés de paquets (F_{HP}, F_{MP}, F_{LP}) sont arrangés en sortie du dispositif de routage (31) sous la forme d'un multiplex temporel.

4. Dispositif de routage selon la revendication 3, certains paquets du flux entrant comportant des estampilles, notamment des estampilles de référence d'horloge système (PCR), des estampilles de décodage (DTS) et des estampilles de présentation (PTS), caractérisé en ce que ledit multiplex temporel issu du dispositif de routage (31) est fourni à l'entrée d'un dispositif de réestampillage (DR) prévu pour recalculer les valeurs d'estampilles rendues non valides suite au réarrangement des paquets effectué par le dispositif de routage (31) et/ou suite à l'insertion des paquets de bourrage.

5. Dispositif de déroutage d'une unité de réception (40) d'un système de transmission de données numériques arrangées en paquets, ledit système étant pourvu d'au moins une unité d'émission (30) qui comprend un dispositif de routage (31) selon l'une des revendications précédentes caractérisé en ce que ladite unité de réception (40) étant constituée, d'une part, de circuits (41, 42) de réception et de traitement des signaux transmis par ladite unité d'émission dudit système (30), lesdits circuits (41, 42) étant prévus pour engendrer des flux de paquets reçus (Fr_{HP}, Fr_{MP}, Fr_{LP}) correspondant à chacun desdits degrés de priorité et, d'autre part, d'un dispositif de déroutage (43) prévu pour former, à partir desdits flux de paquets reçus (Fr_{HP}, Fr_{MP}, Fr_{LP}), un flux sortant de paquets (Fsp), ledit dispositif de déroutage (43) étant constitué d'une pluralité de files (FIFOr_{H}, FIFOr_{M}, FIFOr_{L}) dont chacune d'elles est prévue pour stocker les paquets d'un flux de paquets reçu (Fr_{HP}, Fr_{MP}, Fr_{LP}) de degré de priorité donné, la lecture desdites files (FIFOr_{H}, FIFOr_{M}, FIFOr_{L}) dudit dispositif de déroutage (43) est effectuée séquentiellement, chaque file (FIFOr_{H}, FIFOr_{M}, FIFOr_{L}) délivrant alors un paquet du flux sortant de paquets (Fsp).

6. Système de transmission de données numériques arrangées en paquets, lesdites données étant représentatives de signaux d'images et de signaux de sons engendrés par une ou plusieurs sources, ledit système comportant une unité d'émission (30) prévue pour recevoir, en mode asynchrone, un flux entrant de paquets (Fep), pour le traiter et pour le transmettre à au moins une unité de réception (40), chaque paquet du flux entrant étant affecté d'un degré de priorité défini parmi un nombre prédéterminé de degrés de priorité, les paquets affectés d'un degré de priorité donné étant traités et transmis par ledit système de transmission d'une manière spécifique audit degré de priorité, caractérisé en ce que ladite unité d'émission (30) comprend, d'une part, un dispositif de routage (31) constitué d'une pluralité de files (FIFO_{H}, FIFO_{M}, FIFO_{L}), d'un dispositif d'aiguillage de paquets (DAP) prévu pour diriger chaque paquet du flux entrant (HP, MP, LP) vers l'entrée de l'une des files (FIFO_{H}, FIFO_{M}, FIFO_{L}) selon le degré de priorité auquel il est affecté, ledit paquet (HP, MP, LP) étant alors stocké dans ladite file (FIFO_{H}, FIFO_{M}, FIFO_{L}), la lecture desdites files (FIFO_{H}, FIFO_{M}, FIFO_{L}) étant effectuée séquentiellement, chaque file (FIFO_{H}, FIFO_{M}, FIFO_{L}) délivrant alors un paquet (HP, MP, LP) d'un flux séparé de paquets (F_{HP}, F_{MP}, F_{LP}), des moyens (DIPB) pour insérer un paquet de bourrage (BHP, BMP, BLP) dans le flux séparé de paquets (F_{HP}, F_{MP}, F_{LP}) pour lequel il n'y a pas de paquets dans la file (FIFO_{H}, FIFO_{M}, FIFO_{L}) lue et, d'autre part, des circuits (32, 33, 34) de traitement et d'émission des flux séparés de paquets (F_{HP}, F_{MP}, F_{LP}) issus du dispositif de routage (31).

7. Système selon la revendication 6, caractérisé en ce que chaque unité de réception (40) est constituée de circuits (41, 42) de réception et de traitement des signaux transmis par l'unité d'émission (30), lesdits circuits (41, 42) étant prévus pour engendrer des flux de paquets reçus (Fr_{HP}, Fr_{MP}, Fr_{LP}) correspondant à chacun desdits degrés de priorité et d'un dispositif de déroutage (43) prévu pour former, à partir desdits flux de paquets reçus (Fr_{HP}, Fr_{MP}, Fr_{LP}), un flux sortant de paquets (Fsp), ledit dispositif de déroutage (43) étant constitué d'une pluralité de files (FIFOr_{H}, FIFOr_{M}, FIFOr_{L}) dont chacune d'elles est prévue pour stocker les paquets d'un flux de paquets reçu (Fr_{HP}, Fr_{MP}, Fr_{LP}) de degré de priorité donné, la lecture desdites files (FIFOr_{H}, FIFOr_{M}, FIFOr_{L}) étant effectuée séquentiellement, chaque file (FIFOr_{H}, FIFOr_{M}, FIFOr_{L}) délivrant alors un paquet du flux sortant de paquets (Fsp).

8. Système selon la revendication 6 ou 7, dans lequel certains paquets du flux entrant comprennent des estampilles, notamment des estampilles de référence d'horloge système (PCR), des estampilles de décodage (DTS) et des estampilles de présentation (PTS), caractérisé en ce que la sortie de chaque file (FIFO_{H}, FIFO_{M}, FIFO_{L}) du dispositif de routage (31) est reliée à l'entrée d'un dispositif de réestampillage (DR) prévu pour recalculer les valeurs d'estampilles rendues non valides suite au réarrangement des paquets effectué par le dispositif de routage (31) et/ou suite à l'insertion des paquets de bourrage.

9. Système selon une des revendications 6 ou 7, caractérisé en ce que les flux séparés de paquets sont arrangés en sortie du dispositif de routage (31) sous la forme d'un multiplex temporel.

10. Système selon la revendication 9, dans lequel certains paquets du flux entrant comprennent des estampilles, notamment des estampilles de référence d'horloge système (PCR), des estampilles de décodage (DTS) et des estampilles de présentation (PTS), caractérisé en ce que le multiplex temporel issu du dispositif de routage (31) est fourni à l'entrée d'un dispositif de réestampillage (DR) prévu pour recalculer les valeurs d'estampilles rendues non valides suite au réarrangement des paquets effectué par le dispositif de routage (31) et suite à l'insertion des paquets de bourrage.

11. Procédé de transmission de données numériques arrangées en paquets, lesdites données étant représentatives de signaux d'images et de signaux de sons engendrés par une ou plusieurs sources, chaque paquet d'un flux entrant étant affecté d'un degré de priorité défini parmi un nombre prédéterminé de degrés de priorité, les paquets affectés d'un degré de priorité donné étant soumis à un traitement et étant transmis vers une unité de réception (40) d'une manière spécifique audit degré de priorité, caractérisé en ce qu'il consiste, dans une unité d'émission (30), en synchronisme avec le flux entrant de paquets (Fep), à diriger chaque paquet du flux entrant (HP, MP, LP) vers l'entrée d'une file parmi n files (FIFO_{H}, FIFO_{M}, FIFO_{L}) selon le degré de priorité auquel il est affecté, à stocker ledit paquet (HP, MP, LP) dans ladite file (FIFO_{H}, FIFO_{M}, FIFO_{L}), et, en synchronisme avec une horloge système, à lire séquentiellement lesdites files (FIFO_{H}, FIFO_{M}, FIFO_{L}) afin qu'elles délivrent respectivement des flux séparés de paquets, à insérer un paquet de bourrage dans le flux séparé (F_{HP}, F_{MP}, F_{LP}) de paquets (F_{HP}, F_{MP}, F_{LP}) pour lequel il n'y a pas de paquets dans la file (FIFO_{H}, FIFO_{M}, FIFO_{L}) lue, et à délivrer chaque flux séparé de paquets (F_{HP}, F_{MP}, F_{LP}) en vue de son traitement et de son émission ultérieurs vers une unité de réception (40).

12. Procédé selon la revendication 11, caractérisé en ce qu'il consiste, dans une unité de réception (40), à recevoir et à traiter les signaux transmis par l'unité d'émission (30) de manière à engendrer des flux de paquets reçus (Fr_{HP}, Fr_{MP}, Fr_{LP}) correspondant à chacun desdits degrés de priorité, et à former, à partir desdits flux de paquets reçus (Fr_{HP}, Fr_{MP}, Fr_{LP}), un flux sortant de paquets (Fsp).

13. Procédé selon la revendication 12 caractérisé en ce qu'il consiste à stocker, dans une file parmi une pluralité de files (FIFOr_{H}, FIFOr_{M}, FIFOr_{L}), les paquets d'un flux de paquets reçu (Fr_{HP}, Fr_{MP}, Fr_{LP}) de degré de priorité donné, et à lire lesdites files (FIFOr_{H}, FIFOr_{M}, FIFOr_{L}) séquentiellement de manière à délivrer ledit flux sortant de paquets (Fsp).

14. Procédé selon une des revendications 11 à 13, certains paquets du flux entrant comprenant des estampilles, notamment des estampilles de référence d'horloge système (PCR), des estampilles de décodage (DTS) et des estampilles de présentation (PTS), caractérisé en ce qu'il consiste à effectuer, sur chaque flux séparé de paquets, un réestampillage pour recalculer les valeurs d'estampilles rendues non valides suite au réarrangement des paquets effectué par le dispositif de routage (31) et/ou suite à l'insertion des paquets de bourrage.

15. Procédé selon une des revendications 11 à 13, caractérisé en ce que lesdits flux séparés de paquets sont délivrés dans un même multiplex temporel.

16. Procédé selon la revendication 15, certains paquets du flux entrant comprenant des estampilles, notamment des estampilles de référence d'horloge système (PCR), des estampilles de décodage (DTS) et des estampilles de présentation (PTS), caractérisé en ce qu'il consiste à effectuer, sur ledit multiplex temporel, un réestampillage pour recalculer les valeurs d'estampilles rendues non valides suite au réarrangement des paquets et/ou suite à l'insertion des paquets de bourrage.

## Patentansprüche

1. Vorrichtung zur Leitweglenkung einer Sendeeinheit (30) eines Übertragungssystems für in Paketen angeordnete digitale Daten, welche Daten Bild- und Tonsignale darstellen, die von einer oder mehreren Quellen erzeugt werden, welche Sendeeinheit (30) vorgesehen ist, im Asynchronbetrieb einen eingehenden Paketfluss (Fep) zu empfangen, um diesen zu verarbeiten und an mindestens eine Empfangseinheit (40) zu übertragen, wobei jedem Paket dieses eingehenden Flusses (Fep) ein bestimmter Prioritätsgrad aus einer vorbestimmten Anzahl von Prioritätsgraden zugewiesen ist, welche Vorrichtung zur Leitweglenkung vorgesehen ist, den eingehenden Paketfluss in mehrere Paketflüsse (F_{HP}, F_{MP}, F_{LP}) zu trennen, wobei jeder getrennte Paketfluss (F_{HP}, F_{MP}, F_{LP}), die Pakete des eingehenden Flusses überträgt, die ein und denselben Prioritätsgrad besitzen, **dadurch gekennzeichnet**, dass die Vorrichtung zur Leitweglenkung (31) eine Mehrzahl von Warteschlangen (FIFO_{H}, FIFO_{M}, FIFO_{L}), eine Vorrichtung zur Verzweigung von Paketen (DAP); die vorgesehen ist, jedes Paket des eingehenden Flusses (HP, MP, LP) je nach dem Prioritätsgrad, welcher diesem zugewiesen ist, in Richtung auf den Eingang einer der Warteschlangen (FIFO_{H}, FIFO_{M}, FIFO_{L}) zu lenken, wobei das Paket (HP, MP, LP) dann in dieser Warteschlange (FIFO_{H}, FIFO_{M}, FIFO_{L}) gespeichert wird und wobei das Lesen der Warteschlangen (FIFO_{H}, FIFO_{M}, FIFO_{L}) sequentiell erfolgt und jede Warteschlange (FIFO_{H}, FIFO_{M}, FIFO_{L}) dann ein Paket (HP, MP, LP) eines getrennten Flusses von Paketen (F_{HP}, F_{MP}, F_{LP}) erstellt, und eine Vorrichtung (DIPB) zum Einfügen eines Staupakets (BHP, BMP, BLP) in den getrennten Paketfluss (F_{HP}, F_{MP}, F_{LP}) aufweist, für den bei seinem Lesen keine Pakete in der Warteschlange (FIFO_{H}, FIFO_{M}, FIFO_{L}) vorliegen.

2. Vorrichtung zur Leitweglenkung nach Anspruch 1, bei dem bestimmte Pakete des eingehenden Flusses Markierungen, insbesondere Systemzeitgeber-Referenzmarkierungen (PCR), Dekodiermarkierungen (DTS) und Vorführungsmarkierungen (PTS) aufweisen, **dadurch gekennzeichnet**, dass sie am Ausgang jeder Warteschlange (FIFO_{H}, FIFO_{M}, FIFO_{L}) eine Vorrichtung zur erneuten Markierung (DR) aufweist, die vorgesehen ist, um die nach der von der Vorrichtung zur Leitweglenkung (31) vorgenommenen Neuanordnung der Pakete und/oder nach dem Einfügen der Staupakete ungültig gemachten Markierungswerte neu zu berechnen.

3. Vorrichtung zur Leitweglenkung nach einem der Ansprüche 1 oder 2, dadurch gekennzeichnet, dass die getrennten Paketflüsse (F_{HP}, F_{MP}, F_{LP}) am Ausgang der Vorrichtung zur Leitweglenkung (31) in Form eines Zeitmultiplexes angeordnet sind.

4. Vorrichtung zur Leitweglenkung nach Anspruch 3, bei der bestimmte Pakete des eingehenden Flusses Markierungen, insbesondere Systemzeitgeber-Referenzmarkierungen (PCR), Dekodiermarkierungen (DTS) und Vorführungsmarkierungen (PTS) aufweisen, **dadurch gekennzeichnet,** dass der von der Vorrichtung zur Leitweglenkung (31) kommende Zeitmultiplex an den Eingang einer Vorrichtung zur erneuten Markierung (DR) gegeben wird, die vorgesehen ist, um die nach der von der Vorrichtung zur Leitweglenkung (31) vorgenommenen Neuanordnung der Pakete und/oder nach dem Einfügen der Staupakete ungültig gemachten Markierungswerte neu zu berechnen.

5. Vorrichtung zur Leitwegumlenkung einer Empfangseinheit (40) eines Übertragungssystems für in Paketen angeordnete digitale Daten, welches System mit mindestens einer Sendeeinheit (30) versehen ist, die eine erfindungsgemäße Vorrichtung zur Leitweglenkung (31) nach einem der vorstehenden Ansprüche umfasst, **dadurch gekennzeichnet**, dass die Empfangseinheit (40) einerseits Schaltkreise (41, 42) zum Empfang und zum Verarbeiten der von der Sendeeinheit des Systems (30) übertragenen Signale aufweist, welche Schaltkreise (41, 42) vorgesehen sind, um empfangene Paketflüsse (Fr_{HP}, Fr_{MP}, Fr_{LP}), die jedem der Prioritätsgrade entsprechen, zu erzeugen, und andererseits eine Vorrichtung zur Leitwegumlenkung (43) aufweist, die vorgesehen ist, ausgehend von den empfangenen Paketflüssen (Fr_{HP}, Fr_{MP}, Fr_{LP}) einen ausgehenden Fluss von Paketen (Fsp) zu bilden, wobei die Vorrichtung zur Leitwegumlenkung (43) eine Mehrzahl von Warteschlangen (FIFOr_{H}, FlFOr_{M}, FIFOr_{L}) umfaßt, von denen jede vorgesehen ist, um die Pakete eines empfangenen Paketflusses (Fr_{HP}, Fr_{MP}, Fr_{LP}) mit gegebenem Prioritätsgrad zu speichern, und wobei das Lesen der Warteschlangen (FlFOr_{H}, FIFOr_{M}, FIFOr_{L}) sequentiell erfolgt und jede Warteschlange (FlFOr_{H}, FIFOr_{M}, FIFOr_{L}) dann ein Paket des ausgehenden Flusses von Paketen (Fsp) erstellt.

6. System zur Übertragung von in Paketen angeordneten digitalen Daten, welche Daten Bild- und Tonsignale darstellen, die von einer oder mehreren Quellen erzeugt werden, welches System eine Sendeeinheit (30) umfasst, die vorgesehen ist, um im Asynchronbetrieb einen eingehenden Paketfluss (Fep) zu empfangen, um diesen zu verarbeiten und an mindestens eine Empfangseinheit (40) zu übertragen, wobei jedem Paket des eingehenden Flusses ein bestimmter Prioritätsgrad aus einer vorbestimmten Anzahl von Prioritätsgraden zugewiesen ist, wobei die Pakete, denen ein bestimmter Prioritätsgrad zugewiesen ist, von dem Übertragungssystem in einer für den Prioritätsgrad spezifischen Weise verarbeitet und übertragen werden, **dadurch gekennzeichnet**, dass die Sendeeinheit (30) einerseits eine Vorrichtung zur Leitweglenkung (31) umfasst, die eine Mehrzahl von Warteschlangen (FIFO_{H}, FIFO_{M}, FIFO_{L}), eine Vorrichtung zur Verzweigung von Paketen (DAP) aufweist, die vorgesehen ist, um jedes Paket des eingehenden Flusses (HP, MP, LP) je nach dem zugewiesenen Prioritätsgrad, in Richtung auf den Eingang einer der Warteschlangen (FIFO_{H}, FIFO_{M}, FIFO_{L}) zu lenken, welches Paket (HP, MP, LP) dann in dieser Warteschlange (FIFO_{H}, FIFO_{M}, FIFO_{L}) gespeichert wird, und wobei das Lesen der Warteschlangen (FIFO_{H}, FIFO_{M}, FIFO_{L}) sequentiell erfolgt und jede Warteschlange (FIFO_{H}, FIFO_{M}, FIFO_{L}) dann ein Paket (HP, MP, LP) eines getrennten Paketflusses (F_{HP}, F_{MP}, F_{LP}) erstellt, und Vorrichtungen (DIPB) zum Einfügen eines Staupakets (BHP, BMP, BLP) in den getrennten Paketfluss (F_{HP}, F_{MP}, F_{LP}) aufweist, für den es bei seinem Lesen keine Pakete in der Warteschlange (FIFO_{H}, FIFO_{M}, FIFO_{L}) gibt, und andererseits Schaltkreise (32, 33, 34) zur Verarbeitung und zum Senden der getrennten Paketflüsse (F_{HP}, F_{MP}, F_{LP}) aufweist, die von der Vorrichtung zur Leitweglenkung (31) kommen.

7. System nach Anspruch 6, dadurch gekennzeichnet, dass jede Empfangseinheit (40) Schaltkreise (41, 42) zum Empfang und zur Verarbeitung der von der Sendeeinheit (30) übertragenen Signale aufweist, welche Schaltkreise (41, 42) vorgesehen sind, um empfangene Paketflüsse (Fr_{HP}, Fr_{MP}, Fr_{LP}), die jedem der Prioritätsgrade entsprechen, zu erstellen, und andererseits eine Vorrichtung zur Leitwegumlenkung (43) aufweist, die vorgesehen ist, um ausgehend von den empfangenen Paketflüssen (Fr_{HP}, Fr_{MP}, Fr_{LP}) einen ausgehenden Paketfluss (Fsp) zu bilden, welche Vorrichtung zur Leitwegumlenkung (43) eine Mehrzahl von Warteschlangen (FIFOr_{H}, FIFOr_{M}, FIFOr_{L}) umfaßt, von denen jede vorgesehen ist, um die Pakete eines empfangenen Paketflusses (Fr_{HP}, Fr_{MP}, Fr_{LP}) mit gegebenem Prioritätsgrad zu speichern, wobei das Lesen der Warteschlangen (FIFOr_{H}, FIFOr_{M}, FIFOr_{L}) sequentiell erfolgt und jede Warteschlange (FIFOr_{H}, FIFOr_{M}, FIFOr_{L}) dann ein Paket des ausgehenden Paketflusses (Fsp) erstellt.

8. System nach Anspruch 6 oder 7, bei dem bestimmte Pakete des eingehenden Flusses Markierungen enthalten, insbesondere Systemzeitgeber-Referenzmarkierungen (PCR), Dekodiermarkierungen (DTS) und Vorführungsmarkierungen (PTS), **dadurch gekennzeichnet**, dass der Ausgang jeder Warteschlange (FIFO_{H}, FIFO_{M}, FIFO_{L}) der Vorrichtung zur Leitweglenkung (31) an den Eingang einer Vorrichtung zur erneuten Markierung (DR) gelegt ist, die vorgesehen ist, um die nach der von der Vorrichtung zur Leitweglenkung (31) vorgenommenen Neuanordnung der Pakete und/oder nach dem Einfügen der Staupakete ungültig gemachten Markierungswerte neu zu berechnen.

9. System nach einem der Ansprüche 6 oder 7, dadurch gekennzeichnet, dass die getrennten Paketflüsse am Ausgang der Vorrichtung zur Leitweglenkung (31) in Form eines Zeitmultiplexes angeordnet sind.

10. System nach Anspruch 9, bei dem bestimmte Pakete des eingehenden Flusses Markierungen, insbesondere Systemzeitgeber-Referenzmarkierungen (PCR), Dekodiermarkierungen (DTS) und Vorführungsmarkierungen (PTS) aufweisen, **dadurch gekennzeichnet**, dass der von der Vorrichtung zur Leitweglenkung (31) kommende Zeitmultiplex an den Eingang einer Vorrichtung zur erneuten Markierung (DR) angelegt wird, die vorgesehen ist, um die nach der von der Vorrichtung zur Leitweglenkung (31) vorgenommenen Neuanordnung der Pakete und/oder nach dem Einfügen der Staupakete ungültig gemachten Markierungswerte neu zu berechnen.

11. Übertragungsverfahren für in Paketen angeordnete digitale Daten, welche Daten Bild- und Tonsignale darstellen, die von einer oder mehreren Quellen erzeugt werden, wobei jedem Paket eines Flusses ein bestimmter Prioritätsgrad aus einer vorbestimmten Anzahl von Prioritätsgraden zugewiesen ist, wobei die Pakete, denen ein bestimmter Prioritätsgrad zugewiesen ist, in einer für den Prioritätsgrad spezifischen Weise verarbeitet und übertragen werden, **dadurch gekennzeichnet**, dass in einer Sendeeinheit (30) synchron zum eingehenden Paketfluss (Fep) jedes Paket des eingehenden Flusses (HP, MP, LP) je nach dem ihm zugewiesenen Prioritätsgrad in Richtung auf den Eingang einer Warteschlange aus n Warteschlangen (FIFO_{H}, FIFO_{M}, FIFO_{L}) umgelenkt wird, das Paket (HP, MP, LP) in dieser Warteschlange (FIFO_{H}, FIFO_{M}, FIFO_{L}) gespeichert wird und synchron zu einem Systemzeitgeber die Warteschlangen (FIFO_{H}, FIFO_{M}, FIFO_{L}) sequentiell gelesen wird, damit sie jeweils getrennte Paketflüsse erstellen, ein Staupaket in den getrennten Fluss (F_{HP}, F_{MP}, F_{LP}) von Paketen (F_{HP}, F_{MP}, F_{LP}) eingefügt wird, für den es keine Pakete in der gelesenen Warteschlange (FIFO_{H}, FIFO_{M}, FIFO_{L}) gibt, und jeder getrennte Paketfluss (F_{HP}, F_{MP}, F_{LP}) im Hinblick auf seine Verarbeitung und sein späteres Senden an eine Empfangseinheit (40) erstellt wird.

12. Verfahren nach Anspruch 11, **dadurch gekennzeichnet**, dass in einer Empfangseinheit (40) die von der Sendeeinheit (30) übertragenen Signale empfangen und verarbeitet werden, um empfangene Paketflüsse (Fr_{HP}, Fr_{MP}, Fr_{LP}) zu erzeugen, die jedem der Prioritätsgrade entsprechen, und ausgehend von den empfangenen Paketflüssen (Fr_{HP}, Fr_{MP}, Fr_{LP}) einen ausgehenden Paketfluss (Fsp) zu bilden.

13. Verfahren nach Anspruch 12, **dadurch gekennzeichnet**, dass in einer von mehreren Warteschlangen (FIFOr_{H}, FIFOr_{M}, FIFOr_{L}) die Pakete eines empfangenen Paketflusses (Fr_{HP}, Fr_{MP}, Fr_{LP}) mit gegebenem Prioritätsgrad gespeichert werden und die Warteschlangen (FIFOr_{H}, FIFOr_{M}, FIFOr_{L}) sequentiell gelesen werden, um den ausgehenden Paketfluss (Fsp) zu erzeugen.

14. Verfahren nach einem der Ansprüche 11 bis 13, bei dem bestimmte Pakete des eingehenden Flusses Markierungen enthalten, insbesondere Systemzeitgeber-Referenzmarkierungen (PCR), Dekodiermarkierungen (DTS) und Vorführungsmarkierungen (PTS), **dadurch gekennzeichnet**, dass jeder getrennte Paketfluss neu markiert wird, um die nach der von der Vorrichtung zur Leitweglenkung (31) vorgenommenen Neuanordnungen der Pakete und/oder nach dem Einfügen der Staupakete ungültig gemachten Markierungswerte neu zu bestimmen.

15. Verfahren nach einem der Ansprüche 11 bis 13, **dadurch gekennzeichnet**, dass die getrennten Paketflüsse in ein und demselben Zeitmultiplex abgegeben werden.

16. Verfahren nach Anspruch 15, bei dem bestimmte Pakete des eingehenden Flusses Markierungen, insbesondere Systemzeitgeber-Referenzmarkierungen (PCR), Dekodiermarkierungen (DTS) und Vorführungsmarkierungen (PTS) aufweisen, **dadurch gekennzeichnet**, dass an dem Zeitmultiplex eine erneute Markierung vorgenommen wird, um die nach der Neuanordnung der Pakete und/oder nach dem Einfügen der Staupakete ungültig gemachten Markierungswerte neu zu bestimmen.

## Claims

1. Routing device of a transmission unit (30) of a digital data system arranged in packets, said data being representative of image and sound signals generated from one or more sources, said transmission unit (30) being designed to receive, in asynchronous mode, an incoming packet flow (Fep) to process it and to transmit it to at least one reception unit (40), each packet of said incoming flow (Fep) being assigned to a defined degree of priority among a predetermined number of degrees of priority, said routing device being designed to separate the incoming packet flow into several packet flows (F_{HP}, F_{MP}, F_{LP}), each separate packet flow (F_{HP}, F_{MP}, F_{LP}) carrying incoming packet flows which have been assigned the same degree of priority, characterised in that said routing device (31) consists of a plurality of queues (FIFO_{H,} FIFO_{M}, FIFO_{L}), a packet-switching device (DAP) designed to direct each incoming packet flow (HP, MP, LP) towards the intake of one of the queues (FIFO_{H}, FIFO_{M}, FIFO_{L}) according to the degree of priority assigned to it, said packet (HP, MP, LP) then being stored in said queue (FIFO_{H}, FIFO_{M}, FIFO_{L}), the reading of said queues (FIFO_{H}, FIFO_{M}, FIFO_{L}) being carried out in sequence, each queue (FIFO_{H}, FIFO_{M}, FIFO_{L}) accordingly delivering a packet (HP, MP, LP) from a separate packet flow (F_{HP}, F_{MP}, F_{LP}) and means (DIPB) for inserting a packing packet (BHP, BMP, BLP) into the separate packet flow (F_{HP}, F_{MP}, F_{LP}) for which there are no packets in the queue (FIFO_{H}, FIFO_{M}, FIFO_{L}) while it is being read.

2. Routing device according to Claim 1, characterised in that certain packets of the incoming flow comprise marking devices, in particular clock system reference marking devices (PCR), decoding marking devices (DTS), and presentation marking devices (PTS), characterised in that it comprises, at the output of each queue (FIFO_{H}, FIFO_{M}, FIFO_{L}) a remarking device (DR) is provided, to recalculate the marking values rendered invalid due to the rearrangement of packets effected by the routing device (31) and/or due to the insertion of the packing packets.

3. Routing device according to one of Claims 1 or 2, characterised in that the separate packet flows (F_{HP}, F_{MP}, F_{LP}) are arranged at the output of the routing device (31) in the form of a time multiplexer.

4. Routing device according to Claim 3, with certain incoming packet flows comprising markings, in particular clock system reference marking devices (PCR), decoding marking devices (DTS) and presentation marking devices (PTS) characterised in that said time multiplexer deriving from the routing device (31) is provided at the input of a remarking device (DR) provided in order to recalculate the marking values rendered invalid by the routing device (31) and/or following the insertion of the packing packets.

5. Derouting device of a reception unit (40) of a digital data transmission system arranged in packets, said system being provided with at least one transmission unit (30) comprising a routing device (31) according to one of the preceding Claims, characterised in that said reception unit (40) consists, on the one hand, of reception circuits (41, 42) and signal processing circuits transmitted by said transmission unit of said system (30), said circuits (41, 42) being designed to generate received packet flows (Fr_{HP}, Fr_{MP}, Fr_{LP}) corresponding to each of said degrees of priority, and, on the other, of a derouting device (43) designed to form, based on said packet flows received (Fr_{HP}, Fr_{MP}, Fr_{LP}), an outgoing packet flow (Fsp), said derouting device (43) being constituted by a plurality of queues (FIFOr_{H}, FIFOr_{M}, FIFOr_{L}), each of which is designed to store the packets from a received packet flow (Fr_{H}, Fr_{MP}, Fr_{LP}) of the given degree of priority, the reading of the said queues (FIFOr_{H}, FIFOr_{M}, FIFOr_{L)} of said derouting device (43) being effected in sequence, each queue (FIFOr_{H}, FIFOr_{M}, FIFOr_{L}) thus delivering an outgoing packet flow (Fsp).

6. Transmission system for numerical data arranged in packets, said data being representative of image and sound signals engendered from one or more sources, said system comprising a transmission unit (30) designed to receive, in asynchronous mode, an incoming packet flow (Fep) so as to process it and transmit it to at least one reception unit (40), each incoming packet flow being assigned to a defined degree of priority from among a predetermined number of degrees of priority, the packets assigned to a given degree of priority being processed and transmitted by said transmission system in a manner specific to the said degree of priority, characterised in that said transmission unit (30) comprises, on the one hand, a routing device (31) consisting of a plurality of queues (FIFO_{H}, FIFO_{M}, FIFO_{L}), a packet switching device (DAP) designed to direct each incoming packet flow (HP, MP, LP) to the input of one of the queues (FIFO_{H}, FIFO_{M}, FIFO_{L}) according to the degree of priority to which it has been assigned, said packet (HP, MP, LP) then being stored in said queue (FIFO_{H}, FIFO_{M}, FIFO_{L}), the reading of said queues FIFO_{H}, FIFO_{M}, FIFO_{L}) being effected in sequence, each queue (FIFO_{H}, FIFO_{M}, FIFO_{L}) accordingly delivering one packet (HP, MP, LP) from a separate packet flow (F_{HP}, F_{MP}, F_{LP}), means (DPB) for inserting a packing packet (BHP, BMP, BLP) into the separate packet flow (F_{HP}, F_{MP}, F_{LP}) for which there are no packets in the queue (FIFO_{H}, FIFO_{M}, FIFO_{L}) which has been read, and, on the other, circuits (32,33,34) for processing and transmission of the separate packet flows (F_{HP}, F_{MP}, F_{LP}) deriving from the routing device (31).

7. System according to Claim 6, characterised in that each reception unit (40) consists of circuits (41, 42) for the reception and processing of the signals transmitted by the transmission unit (30), said circuits (41, 42) being designed to engender received packet flows (Fr_{HP}, Fr_{MP}, Fr_{LP}) corresponding to each of the said degrees of priority and a derouting device (43) designed to form, on the basis of said received packet flows (Fr_{HP}, Fr_{MP}, Fr_{LP}) an outgoing packet flow (Fsp), said derouting device (43) consisting of a plurality of queues (FIFOr_{H}, FIFOr_{M}, FIFOr_{L}), each of which is designed to store the packets of a received packet flow (Fr_{HP}, Fr_{MP}, Fr_{LP}) of a given degree of priority, the reading of the said queues (FIFOr_{H}, FIFOr_{M}, FIFOr_{L}) being effected in sequence, each queue (FIFOr_{H}, FIFOr_{M}, FIFOr_{L}) accordingly providing one outgoing packet flow (Fsp).

8. System according to Claim 6 or 7, in which certain incoming packet flows comprise marking devices, particularly clock system reference marking devices (PCR), decoding marking devices (DTS), and presentation marking devices (PTS), characterised in that the output of each queue (FIFO_{H}, FIFO_{M}, FIFO_{L}) of the routing device (31) is connected to the input of a remarking device (DR) designed to recalculate the marking values rendered invalid due in the rearrangement of the packets effected by the routing device (31) and/or as a result of the insertion of the packing packets.

9. System according to one of Claims 6 or 7, characterised in that the separate packet flows are arranged at the output of the routing device (31) in the form of a time multiplex.

10. System according to Claim 9, in which certain incoming packet flows comprise marking devices, and clock system reference marking devices (PCR) in particular, decoding marking systems (DTS), and presentation marking systems (PTS), characterised in that the time multiplexer deriving from the routing device (31) is provided at the input of a remarking device (DR) designed to recalculate the marking values rendered invalid as a result of the rearrangement of the packets effected by the routing device (31) and as a result of the insertion of the packing packets.

11. Process for the transmission of digital data arranged in packets, said data being representative of image and sound signals engendered by one or more sources, each incoming packet flow being assigned to a defined degree of priority from among a predetermined number of degrees of priority, the packets assigned to a given degree of priority being subjected to processing and being transmitted to a reception unit (40) in a manner specific to the said degree of priority, characterised in that it consists, in a transmission unit (30), in synchrony with the incoming packet flow (Fep), of directing each packet of the incoming flow (HP, MP, LP) towards the input of a queue from among n queues (FIFO_{H}, FIFO_{M}, FIFO_{L}) according to the degree of priority to which it has been assigned, in order to store said packet (HP, MP, LP) in said queue (FIFO_{H}, FIFO_{M}, FIFO_{L}), and, in said queues, in order for them to deliver separate packet flows respectively, to insert a packing packet in the separate flow (F_{HP}, F_{MP}, F_{LP}) of packets (F_{HP}, F_{MP}, F_{LP)} for which there have been no packets read in the queue (FIFO_{H}, FIFO_{M}, FIFO_{L}), and to deliver each separate packet flow (F_{HP}, F_{MP}, F_{LP}), with a view to its being processed and subsequent transmission to a reception unit (40).

12. Process according to Claim 11, characterised in that it consists, in a reception unit (40), of receiving and processing the signals transmitted by the transmission unit (30) in such a way as to engender flows of received packets (Fr_{HP}, Fr_{MP}, Fr_{LP}) corresponding to each of the said degrees of priority, and of forming, on the basis of the said packet flows received (Fr_{HP}, Fr_{MP}, Fr_{LP}), an outgoing packet flow (Fsp).

13. Process according Claim 12, characterised in that it consists of storing, in a queue from among a plurality of queues (FIFOr_{H}, FIFOr_{M}, FIFOr_{L}), the packets from a received packet flow (Fr_{HP}, Fr_{MP}, Fr_{LP}) of the given degree of priority, and packets from said queues (FIFOr_{H}, FIFOr_{M,} FIFOr_{L}) in sequence, in such a way as to provide said outgoing packet flow (Fsp).

14. Process according to one of Claims 11 to 13, certain incoming packet flows comprising marking devices, in particular clock system reference marking devices (PCR), decoding marking devices (DTS), and presentation marking devices (PTS), characterised in that it consists of effecting, on each separate packet flow, a remarking process in order to recalculate the marking values rendered invalid as a result of the rearrangement of the packets effected by the routing device (31) and/or the insertion of the packing packets.

15. Process according to one of Claims 11 to 13, characterised in that said separate packet flows are delivered in the same time multiplexer.

16. Process according to Claim 15, certain incoming packet flows comprising marking devices, in particular reference clock system marking devices (PCR), decoding marking devices (DTS), and presentation marking devices (PTS), characterised in that it consists of effecting, at said time multiplexer, a remarking process to recalculate the marking values rendered invalid due to the rearrangement of the packets and/or as a result of the insertion of said packing packets.
